# EUROPÄISCHE PATENTSCHRIFT

(11) **EP 3 839 262 B1**
(45) Veröffentlichungstag und Bekanntmachung des Hinweises auf die Patenterteilung: **30.08.2023**
(21) Anmeldenummer: 20214738.5
(22) Anmeldetag: 16.12.2020
(51) Int. Cl.: F04D 27/00, F04D 25/08

(54) **VENTILATOR MIT EINER SENSOREINRICHTUNG ZUR VERMEIDUNG EINER KOLLISION EINES OBJEKTS MIT DEM ROTOR**
FAN WITH SENSOR DEVICE FOR PREVENTING COLLISION OF AN OBJECT WITH THE ROTOR
VENTILATEUR DOTÉ D'UN DISPOSITIF CAPTEUR PERMETTANT D'ÉVITER UNE COLLISION D'UN OBJET AVEC LE ROTOR

(30) Priorität: 20.12.2019 DE 102019135412
(43) Veröffentlichungstag der Anmeldung: 23.06.2021
(73) Patentinhaber: ebm-papst Mulfingen GmbH & Co. KG, 74673 Mulfingen (DE)
(72) Erfinder: Wystup, Ralph, 74653 Künzelsau (DE); Humm, Markus, 74679 Weißbach (DE); Knipp, Christian Antonius, 74670 Forchtenberg (DE)
(74) Vertreter: Jostarndt Patentanwalts-AG

(56) Entgegenhaltungen:
- DE-A1- 1 966 228
- JP-A- 2013 545 625
- KR-B1- 101 706 990
- KR-U- 20090 001 780

## Beschreibung

### TECHNISCHES GEBIET

Die Erfindung betrifft einen Ventilator mit einer Einrichtung zur Vermeidung einer Kollision eines Objekts mit dem Rotor. Ventilatoren für Raumbelüftungen, Klimaanlagen, PC Lüfter und dergleichen weisen ein Schutzgitter auf. Das Schutzgitter ist so engmaschig, dass Wirbeltiere und insbesondere Menschen und menschliche Gliedmaßen nicht an den Rotor gelangen können. Das Schutzgitter drosselt sowohl an einem Einlaß als auch an einem Auslaß ein vom Ventilator gefördertes Fluid, insbesondere Luft. Durch die Drosselung verringert das Schutzgitter den Wirkungsgrad des Ventilators. Ferner verursacht das Schutzgitter in dem vorbeiströmenden Fluid Verwirbelungen und Turbolenzen, was störende Geräuschemissionen hervorrufen kann. Weiterhin sind Lüfter bekannt, die bei bestimmungsgemäßer Verwendung gar nicht zugänglich sind, aber zugänglich gemacht werden könnten, beispielsweise Lüfter in einem PKW oder PC. Diese weisen in der Regel zur Sicherheit selbst dann ein Schutzgitter auf, wenn eine Zugänglichkeit bei einer bestimmungsgemäßen Verwendung des PKWs oder PCs unwahrscheinlich ist.

Der vorliegenden Erfindung liegt die Aufgabe zugrunde, einen Ventilator anzugeben, der ohne ein axiales Schutzgitter läuft, und bei dem eine Kollision zwischen einem Objekt und einem Rotor im Ventilator unterbunden werden kann.

Ein Ventilator mit Schutzgitter und zusätzlichem mithilfe einer Kontrolleinheit ausgebildeten Kollisionsschutz ist aus der KR 2009 0001780 U bekannt. Hier wird ein Distanzsensor benutzt, um ein Annähern eines Objektes an den Käfig zu detektieren, sodass bei Ausschlag des Sensors der Rotor gestoppt werden kann und eine größere Beschädigung des Objekts und des Rotors verhindert ist.

Diese Aufgabe wird durch die unabhängigen Ansprüche gelöst. Die Unteransprüche stellen weitere vorteilhafte Ausgestaltungen dar. Die Unteransprüche sind in beliebiger, technologisch sinnvoller Weise miteinander kombinierbar. Die Beschreibung, insbesondere im Zusammenhang mit den Ausführungsbeispielen, charakterisiert und spezifiziert die Erfindung zusätzlich.

Vorgesehen ist demgemäß ein Ventilator, aufweisend einen Rotor, der um eine Rotationsachse rotierbar gelagert ist und an dem schaufelartige Rotorblätter angeordnet sind, weiterhin aufweisend:
- eine Sensoreinrichtung zum Erfassen eines möglicherweise vorhandenen Objekts, welches sich einem Rotorblatt nähert,
- eine Steuereinrichtung, welche mit der Sensoreinrichtung und dem Ventilator signalübertragend verbunden ist,
- wobei die Steuereinrichtung ausgestaltet ist zum Extrapolieren einer Bewegungsbahn des Objekts aus einer Lage und einer Geschwindigkeit des Objekts,
- und wobei die Steuereinrichtung ferner dazu ausgestaltet ist, eine Winkellage bzw. Rotationsgeschwindigkeit des Rotors dergestalt zu beeinflussen, dass sich das Objekt ohne eine Kollision mit einem der Rotorblätter weiterhin entlang seiner Bewegungsbahn bewegen kann.

Bei dem Rotor kann es sich um einen Rotor für einen Ventilator handeln. Bei dem Ventilator kann es sich wie gesagt um einen Ventilator für eine Raumbelüftung, eine PC Belüftung, oder um Ähnliche Ventilatoren handeln. Der elektromechanische Wandler kann auch ein Elektromotor sein, der den Rotor als Lüfter antreibt.

Die Sensoreinrichtung kann dazu ausgestaltet sein, ein Objekt, dass sich dem Rotorblatt nähert, hinreichend genau hinsichtlich seiner momentanen Lage, Geschwindigkeit und Beschleunigung zu erfassen und optische und oder optische Signale in maschinenlesbare analoge oder digitale Signale umzuwandeln, die von der Steuereinrichtung erfaßt werden können. Selbstverständlich kann die Sensoreinrichtung dazu ausgestaltet sein, das Objekt unabhängig von weiteren Umgebungsbedingungen wie Dunkelheit und Nebel zu erfassen. Die Steuereinrichtung kann einen Mikroprozessor aufweisen sowie einen Datenspeicher, auf dem ein Programm abgelegt ist. Die Steuereinrichtung ist dazu ausgestaltet, die vom Sensor gewonnenen Daten zu erfassen und mit dem Programm auszuwerten. Das Programm ist dazu ausgestaltet, die Lage, Geschwindigkeit und Beschleunigung aus den Daten zu berechnen und in Relation zu der momentanen und zukünftigen Position des Rotors zu bringen. Insbesondere ist die Steuereinrichtung in der Lage, bei gleichbleibender Bewegungsbahn des Objekts zu kalkulieren, wann eine Kollision bei gleichbleibender Drehzahl des Rotors stattfinden wird und mit welchem Rotorblatt. Bei einer bevorstehenden Kollision kann ein signaltechnisches, optisches oder akustisches Warnsignal ausgegeben werden.

Weiterhin berechnet die Steuereinrichtung, ob eine Kollision möglicherweise gar nicht auftritt, das Objekt also zwischen den Rotorblättern hindurch gelangen kann. In diesem Fall erfolgt möglicherweise keine Reaktion. In einem weiteren Szenario kann eine Kollision durch eine Beschleunigung des Rotors verhindert werden. In diesem Fall veranlaßt die Steuereinrichtung den elektromechanischen Wandler (Elektromotor) zu der entsprechenden Beschleunigung. Vorzugsweise erfolgt die Beschleunigung des Rotors zur Vermeidung einer Kollision jedoch nur, wenn eine Kollision durch eine Abbremsung nicht zu vermeiden ist, beispielsweise bei sehr schnellen Objekten wie Vögeln und Fledermäusen. In einem weiteren Fall erkennt die Steuereinrichtung, dass eine Kollision nur durch ein Anhalten des Rotors vermeidbar ist. In diesem Fall bremst die Steuereinrichtung den Rotor.

In einer Ausgestaltung ist der Rotor über eine Bremseinrichtung bremsbar. Die Bremseinrichtung kann dazu ausgestaltet sein, den Rotor innerhalb weniger als zwei Umdrehungen des Rotors zum Stillstand abzubremsen. Vorzugsweise wird der Rotor abgebremst, bevor ein Objekt in einen Schutzbereich um den Rotor eindringen kann.

Die Bremseinrichtung kann separat oder in den elektromechanischen Wandler integriert sein. Die Bremseinrichtung ist dazu ausgestaltet, den Rotor so schnell abzubremsen, dass der Rotor steht, bevor das Objekt in seine Nähe gelangt. Hierfür kann die Bremseinrichtung dazu ausgestaltet sein, ausgehend von einer verbleibenden Zeit bis zu einer Kollision den Rotor unterschiedlich stark abzubremsen.

In einer Ausgestaltung ist die Bremseinrichtung durch eine an einem Außenumfang des Rotors angeordnete Ringfläche und eine damit zusammenwirkende Bremsbacke gebildet. Der Rotor und die Rotorblätter weisen eine Massenträgheit auf. Die Ringfläche außen am Rotor ist innenumfänglich mit den Rotorblättern verbunden. Bei einer abrupten Bremsung der Rotorblätter wirken aufgrund der Bremsbeschleunigung und der Massenträgheit des Rotors bzw. der Rotorblätter in Rotationsrichtung Kräfte in der Rotationsrichtung auf die Rotorblätter. Die außenumfängliche Ringfläche stützt die Ringfläche der Rotorblätter ab, so dass die Kräfte nicht zu einer Überlastung der Rotorblätter führen können. Der Aktuator und die Bremsbacke können an einem massiven Wandring angeordnet sein, der den Rotor umgibt. Der Aktuator kann elektromechanisch sein und über einen elektrisch ansteuerbaren Magneten die Bremsbacke betätigen. In einer Variante kann der Aktuator auch eine Feder aufweisen, die im Betrieb des Ventilators in Richtung schließender bzw. bremsender Stellung vorgespannt ist, so dass die Bremsbacke sich durch die Feder bei einem Ausfall des Aktuators an die Ringfläche anlegt und den Rotor abbremst. In einer Ausgestaltung ist die Ringfläche an einem Außenumfang der Rotorblätter mit den Rotorblättern befestigt. In anderen Ausgestaltungen ist die Ringfläche in radialer Richtung weiter innen oder weiter außen bezüglich der Rotorblätter angeordnet.

In einer weiteren Ausgestaltung weist der Ventilator ein abbremsendes pyrotechnisch aufblasbares Auffangkissen auf, welches vor einer bevorstehenden Kollision eines Rotorblattes mit dem Objekt gezündet wird und welches das Rotorblatt anhält.

Das pyrotechnisch aufblasbare Auffangkissen, auch als Airbag bezeichnet, kann bei größeren Lüftern an den Rotorblättern angeordnet sein. Bei kleineren Rotoren kann das Auffangkissen an einem Rahmen angeordnet sein, der den Rotor trägt. Das Auffangkissen kann zwischen die Rotorblätter eingreifen oder außenumfänglich angeordnet sein, so dass nach einem Aufblasen des Auffangkissens die Rotorblätter gegen das Auffangkissen stoßen und somit aufgehalten werden. Zur Momentenabstützung, das heißt zur Verhinderung eines auf den Rotor wirkenden Kippmoments, können zwei um 180° versetzt zueinander angeordnete pyrotechnisch aufblasbare Auffangkissen vorgesehen sein. Es kann vorgesehen sein, dass das Auffangkissen den Rotor innerhalb von weniger als 100 Millisekunden, insbesondere weniger als 50 Millisekunden, besonders bevorzugt weniger als 20 Millisekunden anhält. Die angegebenen Zeiten, innerhalb derer das Auffangkissen den Rotor anhält, beinhaltet die Zeit von einer Auslösung einer pyrotechnischen Treibladung bis zum Stillstand des Rotors.

In einer alternativen oder ergänzenden Ausgestaltung weist der Ventilator ein außenumfängliches pyrotechnisch aufblasbares Auffangkissen auf, welches so geformt ist, dass es sich bei einem Aufblasen um den Ventilator herum erstreckt, insbesondere um eine Hälfte des Ventilators herum.

Das außenumfängliche pyrotechnisch aufblasbare Auffangkissen, welches so geformt ist, dass es sich bei einem Aufblasen um den Ventilator herum erstreckt, kann sich beispielsweise halbkugelförmig um den Ventilator legen.

Das außenumfängliche pyrotechnisch aufblasbare Auffangkissen, welches so geformt ist, dass es sich bei einem Aufblasen um den Ventilator herum erstreckt, kann eine Umgebung des Ventilators vor umherfliegenden Teilen schützen, wenn beispielsweise der Rotor so abrupt abgebremst werden mußte, dass seine Massenträgheit zu einer mechanischen Zerstörung des Rotors führt.

Die mechanische Zerstörung kann insbesondere auftreten, wenn gemäß einer weiteren Ausgestaltung der Ventilator eine mechanische, in eine Bewegungsbahn der Rotorblätter eindringende und den Rotor abrupt zum Stillstand bringende Stopeinrichtung aufweist, die zur Vermeidung einer Kollision betätigt wird und deren Stopwirkung die Rotorblätter mechanisch überlastet.

Die Stopeinrichtung kann in einer Ausgestaltung durch ein Stopelement gebildet sein, welches über einen entsprechenden Aktor in eine Bewegungsbahn der Rotorblätter bewegt werden kann. Hierbei wird eine Beschädigung der Rotorblätter in Kauf genommen. Das Stopelement kann insbesondere in einer Winkellage, in der bei Nichtabbremsung des Rotors eine Kollision des Objekts mit dem Rotor zu erwarten ist, in die Bewegungsbahn der Rotorblätter bewegt werden. In einer Ausgestaltung sind mehrere Stopeinrichtungen am Umfang des Rotors verteilt. In einer weiteren Ausgestaltung sind die Stopeinrichtungen gleichmäßig am Umfang des Rotors verteilt. In einer weiteren Ausgestaltung entspricht eine Anzahl an Stopeinrichtungen einer Anzahl von am Rotor angeordneten Rotorblättern. Dadurch kann innerhalb kürzester Zeit genau an einer Position, in der ansonsten eine Kollision des Objekts mit dem Rotorblatt erfolgen würde, die dem Rotorblatt momentan entsprechende Stopeinrichtung aktiviert werden und das entsprechende Rotorblatt mechanisch gestoppt werden.

Der Aktuator der Stopeinrichtung kann an einem massiven Wandring angeordnet sein, der den Rotor umgibt. Der Aktuator kann elektromechanisch sein und über einen elektrisch ansteuerbaren Magneten die Stopeinrichtung betätigen. In einer Variante kann der Aktuator auch eine Feder aufweisen, die im Betrieb des Ventilators in Richtung der stoppenden Stellung vorgespannt ist, so dass die Stopeinrichtung durch die Feder bei einem Ausfall des Aktuators bzw. der Steuereinrichtung in die Bewegungsbahn der Rotoren bewegt wird.

In einer Ausgestaltung weist der Ventilator ferner zum Schutz vor einer Kollision eines Objekts mit dem Rotor ein axial abdeckendes pyrotechnisch aufblasbares Auffangkissen auf, welches eine Barriere zwischen dem Objekt und den Rotor ausbildet.

Die Barriere erfüllt zwei Funktionen, zum einen schützt sie die Umgebung vor umherfliegenden Teilen, zum anderen verhindert sie vollständig, dass das Objekt in den Bereich des Rotors gelangen kann.

In einer Ausgestaltung ist die Steuereinrichtung ferner dazu ausgestaltet, Leiterwicklungen eines Stators und/oder Elektrorotors des elektromechanischen Wandlers zur Abbremsung des Rotors kurzzuschließen.

Je nach Bauweise des elektromechanischen Wandlers sind entweder der Elektrorotor oder der Stator oder beide alternierend bestromt, um Strom zu erzeugen oder mechanische Antriebsleistung bereitzustellen. Es kann sich bei dem elektromechanischen Wandler um einen bürstenlosen Gleichstrommotor handeln, bei dem der Stator alternierend bestromt wird, um den Rotor anzutreiben. Wenn der Stator kurzgeschlossen wird, wirkt eine Induktion im Stator bremsend auf den Rotor. Die so erzielbare Bremsleistung ist aber nicht so hoch wie beispielsweise eine Bremsleistung, die von der Bremseinrichtung erzeugt werden kann. Die von einer separaten Bremse erzielbare Bremsleistung kann höher gewählt werden. In einer Ausgestaltung wird demnach bei geringen erforderlichen Verzögerungen des Rotors, beispielsweise wenn das Objekt noch ausreichend weit weg ist, zunächst der Stator kurzgeschlossen. Wenn der Rotor wider erwarten noch nicht schnell genug gebremst wird, wird zusätzlich die Bremse aktiviert. Wenn die Bremse den Rotor dadurch auch nicht schnell genug abbremst, kann eines der pyrotechnisch aufblasbaren Luftkissen gezündet werden. Alternativ oder ergänzend kann die zuvor beschriebene Stopeinrichtung zusätzlich den Rotor oder einzelne Rotorblätter stoppen.

In einer Ausführung ist die Steuereinrichtung dazu ausgestaltet, den elektromechanischen Wandler anzuweisen, seine Rotationsgeschwindigkeit zu erhöhen, so dass das Objekt nicht mit einem Rotorblatt kollidiert, sondern zwischen zwei benachbarten Rotorblättern durch den Rotor passieren kann.

Diese Ausgestaltung kann beispielsweise zielführend sein, wenn es sich bei dem Objekt um einen Vogel handelt, der im Verhältnis zu dem Rotor so schnell ist, dass der Rotor nicht schnell genug zum Stillstand gebracht werden könnte. In diesem Fall kann statt einer Abbremsung des Rotors eine Beschleunigung wie beschrieben zur Kollisionsvermeidung zielführend sein. Die Erhöhung Rotationsgeschwindigkeit kann bei einem angetriebenen Ventilator durch eine Erhöhung einer elektrischen Antriebsleistung erfolgen.

In einer Ausgestaltung weist die Sensoreinrichtung zwei Sensoren auf, wobei ein erster Sensor dazu ausgestaltet ist, eine erste Meßgröße zu erfassen, und wobei ein zweiter Sensor dazu ausgestaltet ist, eine zweite, von der ersten Meßgröße abweichenden Meßgröße zu erfassen, und wobei der erste und zweite Sensor selektiert ist aus einer nicht abgeschlossenen Liste, aufweisend wahlweise: einen Infrarotsensor, eine Infrarotkamera, einen Ultraschallsensor, einen Lidarsensor, einen Radarsensor, eine bei sichtbarem Licht operierende Kamera.

Die Sensoreinrichtung weist zwei Sensoren auf, damit erstens die Ergebnisse einer Auswertung der Signale des ersten Sensors validiert werden kann. Zum anderen soll eine Sicherheit bei der Erfassung erhöht werden. Die ersten und zweiten Sensoren können ferner zweifach vorhanden sein, so dass bei einem Ausfall eines der Sensoren noch immer ein erster und ein zweiter Sensor vorhanden ist.

In zumindest einer Ausgestaltung weist der Ventilator einen Rotor mit Rotorblättern und einen elektromechanischen Wandler auf, der mit dem Rotor drehfest verbunden ist, wobei ferner eine Sensoreinrichtung vorgesehen ist, wobei das Verfahren die folgenden Schritte aufweist:
- Erfassen eines möglicherweise vorhandenen Objekts, welches sich dem Rotorblatt nähert, über die Sensoreinrichtung,
- Extrapolieren einer Bewegungsbahn des Objekts aus einer Lage und einer Geschwindigkeit relativ zu dem Ventilator und den Rotorblättern unter Berücksichtigung einer Winkellage und Rotationsgeschwindigkeit des Rotors,
- Beeinflussung der Rotorgeschwindigkeit so, dass sich das Objekt weiterhin ohne eine Kollision mit einem der Rotorblätter entlang der Bewegungsbahn bewegen kann.

Dabei kann die Beeinflussung der Rotorgeschwindigkeit über einen Aktuator erfolgen, der eine Bremsbacke betätigt, welche auf eine außenumfänglich am Rotor angeordnete Ringfläche wirkt, um den Rotor zu bremsen. Hierfür ist die Steuereinrichtung signalübertragend mit dem Aktuator verbunden.

Wie zuvor erwähnt, kann bei dem Verfahren die Beeinflussung der Rotorgeschwindigkeit über eine Entfaltung eines abbremsenden pyrotechnisch aufblasbaren Auffangkissen erfolgen, das den Rotor anhält. Das Auffangkissen entfaltet sich vorzugsweise so innerhalb von weniger als 100 Millisekunden, insbesondere weniger als 50 Millisekunden, besonders bevorzugt weniger als 30 Millisekunden angehalten werden kann.

Vorgesehen ist hierfür ein Computerprogrammprodukt, mit Programmcode-Mitteln, die auf einem computerlesbaren Datenträger gespeichert sind, um ein wie oben beschrieben ausgestaltetes Verfahren durchzuführen, wenn das Computerprogrammprodukt auf einem Computer, insbesondere einer Steuereinrichtung für einen Ventilator ausgeführt wird.

Hierfür kann das Computerprogramm kodierte Anweisungen aufweisen, die das Verfahren durchführen, wenn das Computerprogramm auf einem Computer, insbesondere einem Computer in einer hierin offenbarten Steuereinrichtung ausgeführt wird.

Das Verfahren zur Erkennung von Objekten und zum Anhalten bzw. Beschleunigen eines Rotors zur Vermeidung einer Kollision mit dem Objekt kann hard- und/oder softwaretechnisch in einer Steuereinrichtung ausgebildet sein. Die Steuereinrichtung kann insbesondere eine vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische Festkörper und/oder andere nicht-flüchtige Medien aufweisen. Das Programm kann derart beschaffen sein, dass es die hier beschriebenen Verfahren verkörpert bzw. auszuführen imstande ist, so dass die CPU die Schritte solcher Verfahren ausführen kann und damit die Aktuatoren für die Bremse und die Stopeinrichtung, die pyrotechnisch aufblasbaren Auffangkissen und den elektromechanischen Wandler steuern, insbesondere regeln, kann.

Weitere Einzelheiten und Vorteile der Erfindung werden anhand der in den Zeichnungen dargestellten Ausführungsbeispiele deutlich. Es zeigen:
Fig. 1: schematisch einen Ventilator mit einer Steuereinrichtung und einer Sensoreinrichtung;
Fig 2: schematisch einen Ventilator mit einer Stopeinrichtung;
Fig. 3: schematisch einen Ventilator mit einer Bremseinrichtung;
Fig. 4: schematisch einen Ventilator mit einem abbremsenden pyrotechnisch aufblasbaren Auffangkissen, welches den Rotor stoppt; und
Fig. 5: schematisch einen Ventilator mit einem axial abdeckenden pyrotechnisch aufblasbaren Auffangkissen, welches den Rotor axial abdeckt;
Fig. 6: schematisch einen Ventilator mit einem außenumfänglichen pyrotechnisch aufblasbaren Auffangkissen, welches eine Umgebung vor umherfliegenden Teilen schützt; und
Fig. 7: schematisch drei Verfahrensschritte, welche in der Steuereinrichtung ablaufen können, um den Ventilator zu steuern.

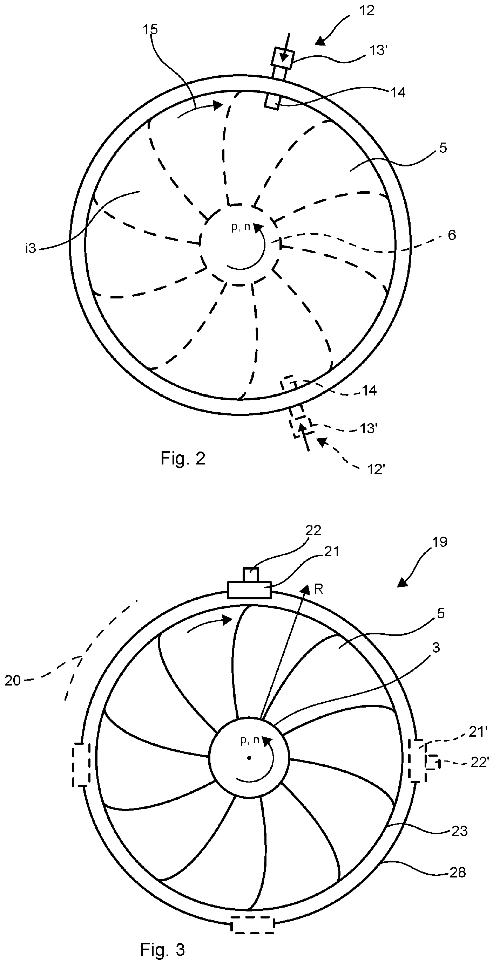

Die folgende Beschreibung ist dem Wesen nach lediglich veranschaulichend. Der Klarheit halber werden in den Zeichnungen zur Bezeichnung ähnlicher Elemente dieselben Bezugszeichen verwendet. Die in den Figuren 2 bis 6 dargestellten Einrichtungen können einzeln oder kombiniert an einem Ventilator nach Anspruch 1 vorgesehen sein. Sie sind der Übersichtlichkeit halber getrennt voneinander dargestellt.

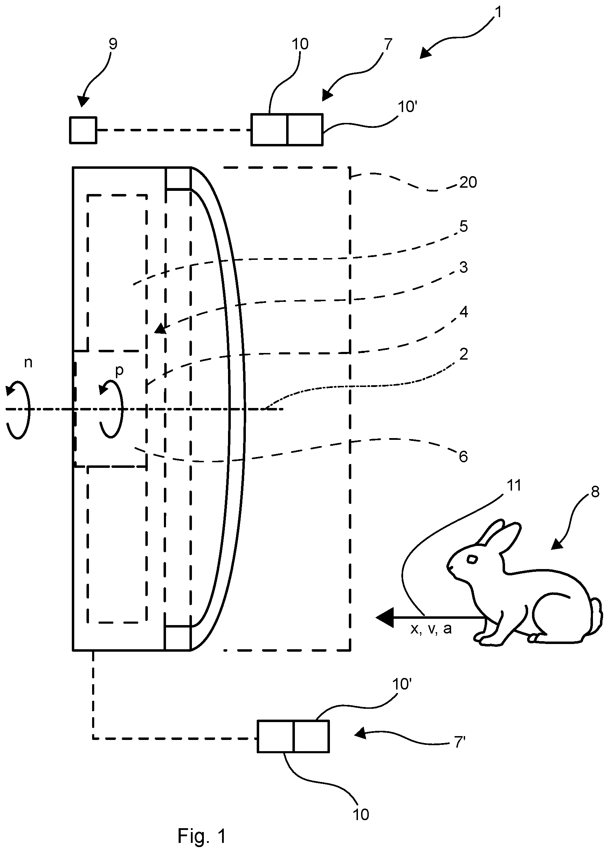

Fig. 1 zeigt einen Ventilator 1, aufweisend einen um eine Rotationsachse 2 rotierbar gelagerten Rotor 3. Aus einer Nabe 4 am Rotor 3 erstrecken sich Rotorblätter 5. In der Nabe 4 kann ein elektromechanischer Wandler 6 angeordnet sein, der mit dem Rotor 3 drehfest verbunden ist.

Nahe an dem Ventilator 1, möglicherweise mit dem Ventilator 1 verbunden oder in einer übergeordneten, nicht dargestellten Einheit, ist eine Sensoreinrichtung 7, 7' zum Erfassen eines möglicherweise vorhandenen Objekts 8 angeordnet. Die Sensoreinrichtung 7 ist dazu ausgestaltet, das Objekt 8 zu erfassen. Die Sensoreinrichtung 7 ist dazu ausgestaltet, eine Lage x des Objekts 8 zu erfassen und hieraus ein Signal zu erzeugen, welches von einer Steuereinrichtung 9 ausgewertet werden kann. Die Steuereinrichtung 9 ist mit den Sensoreinrichtungen 7, 7' und dem Ventilator 1 signalübertragend verbunden. Die Sensoreinrichtung 7, 7' kann wie in Figur 2 dargestellt zweifach vorhanden sein, um einen größeren Bereich um den Ventilator 1 erfassen zu können. Die Sensoreinrichtung 7, 7' kann zur Erfassung des Objekts 8 Sensoren 10, 10' aufweisen.

In der Steuereinrichtung 9 läuft im Betrieb des Ventilators 1 ein Computerprogramm, welches in der Lage ist, aus einer zeitlichen Änderung einer Lage x des Objekts 8 eine Geschwindigkeit v und eine Beschleunigung a des Objekts 8 zu detektieren und zur Verarbeitung zumindest temporär zu speichern. Aus der Lage x, der Geschwindigkeit v und der Beschleunigung a des Objekts 8 kann die Steuereinrichtung 9 eine Bewegungsbahn 11 des Objekts 8 berechnen. Die Bewegungsbahn 11 gibt demnach eine Lage X des Objekts 8 in den nächsten Sekunden wieder. Der Steuereinrichtung 9 ist ferner eine Winkellage p und eine Rotationsgeschwindigkeit n des Rotors 3 bekannt. Die Steuereinrichtung 9 kann nunmehr aus der Bewegungsbahn 11 des Objekts 8 und der Winkellage p und Rotationsgeschwindigkeit, unter Kenntnis einer Geometrie des Rotors 3 sowie einer Anzahl und Winkellage einzelner Rotorblätter 5 erkennen, ob die Bewegungsbahn 11 des Objekts 8 eine Bewegungsbahn der Rotorblätter 5 schneidet. Schneiden sich die Bewegungsbahnen der Rotorblätter 5 und des Objekts 11, so könnte eine Kollision bevorstehen. Die Steuereinrichtung 9 ist dazu ausgestaltet, die Rotationsgeschwindigkeit n des Rotors 3 so zu beeinflussen, dass eine Kollision verhindert wird. Die Beeinflussung der Rotationsgeschwindigkeit n kann beispielsweise durch zusätzliche Komponenten erfolgen oder durch eine entsprechende Steuerung des elektromechanischen Wandlers 6. Die im Zusammenhang mit den Figuren 2 bis 6 diskutierten Ausführungen sind allesamt einzeln oder kombiniert an einem Ventilator 1 gemäß Figur 1 applizierbar.

Die Beeinflussung der Rotationsgeschwindigkeit n kann erfolgen, indem der Rotor 3 beschleunigt, die Rotationsgeschwindigkeit n also erhöht wird, wenn eine Geschwindigkeit v und Beschleunigung des Objekts 8 hoch genug ist, um berührungsfrei zwischen zwei Rotorblättern 5 hindurch gelangen zu können. Bei dem Objekt 8 kann es sich, anders als beispielhaft dargestellt, auch um einen sehr schnellen Vogel handeln. In nicht dargestellter Weise kann der Rotor 3 auch gebremst werden, indem eine nicht dargestellte Statorwicklung, welche in dem elektromechanischen Wandler 6 vorgesehen ist, kurzgeschlossen wird, damit selbstinduzierte Ströme ein abbremsendes Magnetfeld erzeugen können. Weiterhin kann der Stator auch so angesteuert werden, dass ein den Rotor 3 abbremsendes Moment erzeugt wird.

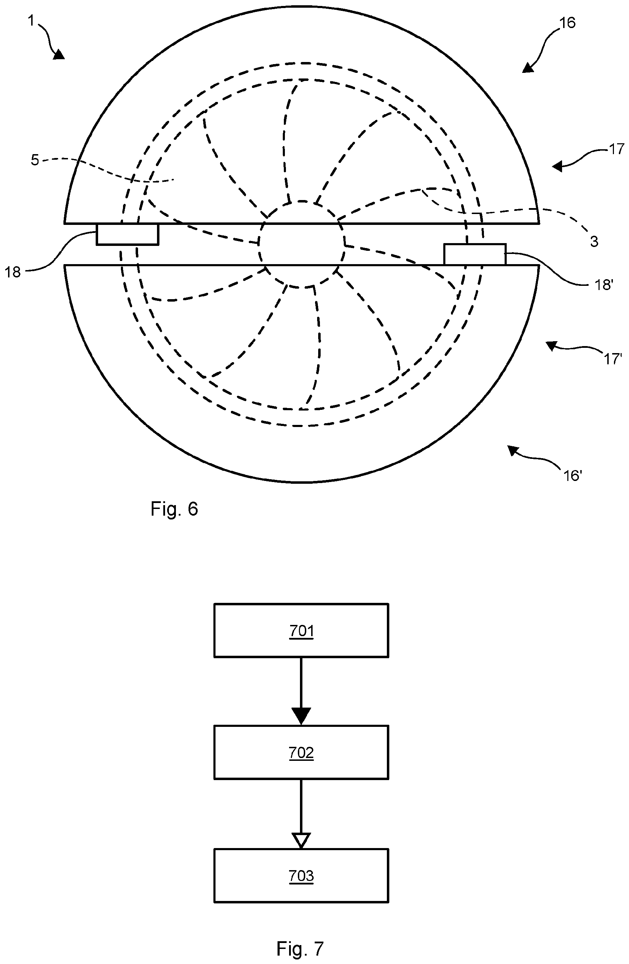

Wie in Figur 2 beispielhaft und schematisch dargestellt, kann die Beeinflussung der Rotationsgeschwindigkeit n auch über eine Stopeinrichtung 12, 12' erfolgen. Die Stopeinrichtung 12, 12` ist im gezeigten Ausführungsbeispiel zweifach vorhanden, es können aber auch der Anzahl an Rotorblättern 5 entsprechende Stopeinrichtungen 12, 12' vorgesehen sein. Die Stopeinrichtung 12, 12' weist einen Aktuator 13 und ein Stopelement 14 auf. Das Stopelement 14 kann ein Kunststoffblock oder dergleichen sein. Es dringt bei Auslösung des Aktuators 13 in eine Bewegungsbahn 15 der Rotorblätter 5 ein und hindert diese unmittelbar an einer weiteren Rotation. Durch den abrupten Halt können die Rotorblätter 5 infolge einer Massenträgheit i3 des Rotors 3 kaputt gehen. Damit hierbei keine umherfliegenden Splitter zu Verletzungen am Objekt 8 oder anderen nicht dargestellten Objekten erfolgt, kann während der Auslösung der Stopeinrichtung 12, 12' gleichzeitig ein den Ventilator 1 vollständig umschließender Airbag gezündet werden, wie in Figur 6 dargestellt.

Figur 6 zeigt wie erwähnt einen Ventilator 1 mit einem Airbag bzw. einem außenumfänglichen pyrotechnisch aufblasbaren Auffangkissen 16, welches so geformt ist, dass es sich bei einem Aufblasen um den Ventilator 1 bzw. den Rotor 3 herum erstreckt. Insbesondere kann das pyrotechnisch aufblasbare Auffangkissen 16 halbkugelförmig sein. In dem in Figur 6 gezeigten Ausführungsbeispiel ist jeweils um eine Hälfte 17, 17' des Ventilators 1 herum ein außenumfängliches pyrotechnisch aufblasbares Auffangkissen 16, 16' angeordnet. In einer betriebsbereiten Lage sind die außenumfänglichen Auffangkissen 16, 16' in Airbagmodulen 18, 18' angeordnet. Entweder bei einer zu erwartenden Beschädigung des Rotors 3, oder bei einer erfolgten Beschädigung des Rotors 3, oder bei einer Annäherung einer Objekts nahe an den Rotor, wird das außenumfänglich pyrotechnisch ausblasbare Auffangkissen 16 gezündet. Zur Zündung ist in den Airbagmodulen 18, 18' in nicht dargestellter Weise eine pyrotechnische oder sonstige geeignete Treibladung signalübertragend mit der Steuereinrichtung 9 verbunden, so dass bei einer von der Steuereinrichtung 9 detektierten bevorstehenden Kollision des Objekts 8 mit dem Rotor 3 und/oder einer Zerstörung des Rotors 3 durch die Stopeinrichtung 12 (siehe Figur 2) das Auffangkissen 16 entfaltet werden kann.

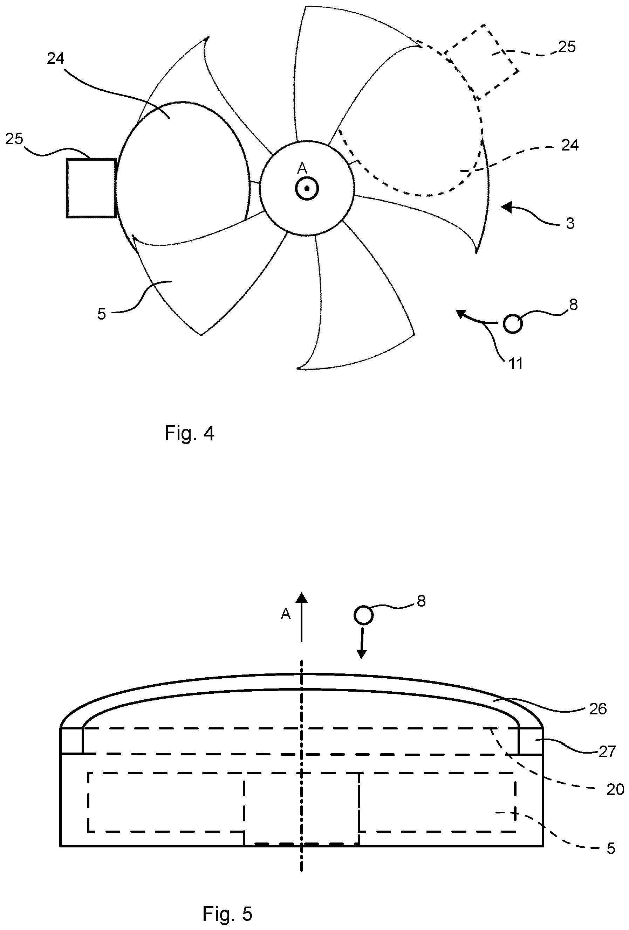

Das in Figur 6 dargestellte pyrotechnisch aufblasbare Auffangkissen 16, 16' ist eins von drei hierin offenbarten Varianten. Eine weitere Variante wird wie ein Vorhang über den Rotor 3 gespannt, entsprechend Figur 5. Eine weitere Variante greift wie die Stopeinrichtung 12, 12` in eine Bewegungsbahn 15 der Rotorblätter 5 ein und stoppt den Rotor 3 auf diese Weise.

Entsprechend dem in Figur 3 dargestellten Ausführungsbeispiel ist der Rotor 3 mit Bremseinrichtung 19 bremsbar. Die Bremseinrichtung 19 ist dazu ausgestaltet, den Rotor 3 innerhalb kürzester Zeit bzw. kürzer Zeit zum Stillstand abzubremsen. Dies erfolgt insbesondere, bevor ein Objekt in einen Schutzbereich 20 um den Rotor 3 eindringen kann. Die Bremseinrichtungen 19 kann hierzu eine Bremsbacke 21 aufweisen, der über einen Aktuator 22 entgegen einer radialen Richtung R einwärts bewegt werden kann. Der Aktuator 22 und die Bremsbacke 21 sind an einem massiven Wandring 28, der den Rotor 3 umgibt. befestigt. Die Bremsbacke 21 kommt dann in einen reibschlüssigen Kontakt mit einer an einem Außenumfang des Rotors 3 angeordneten Ringfläche 23 und bremst durch einen Reibschluß zwischen der Ringfläche 23 und der Bremsbacke 21 den Rotor 3 ab. Wie in Figur 3 dargestellt, können mehrere Bremsklötze 21 und Aktuatoren 22 am Umfang gleichmäßig verteilt angeordnet sein. Die Bremseinrichtung 19 kann betätigt werden, um den Rotor 3 z stoppen, wenn ein Stop des elektromechanischen Wandlers 6 durch einen Kurzschluß der Statorwicklung oder sonstige mildere Maßnahmen den Rotor 3 nicht rechtzeitig vor einer Kollision stoppen können.

Wie bereits oben im Zusammenhang mit den halbkugelförmig aufblasbaren pyrotechnischen Auffangkissen zum Schutz der Umgebung vor umherfliegenden Teilen erläutert, kann der Ventilator entsprechend dem in Figur 4 dargestellten Ausführungsbeispiel ein abbremsendes, pyrotechnisch aufblasbares Auffangkissen 24 aufweisen, welches vor einer bevorstehenden Kollision eines Rotorblattes 5 mit dem Objekt 8 gezündet wird und welches das Rotorblatt 5 innerhalb von weniger als 100 Millisekunden, insbesondere weniger als 50 Millisekunden, besonders bevorzugt weniger als 30 Millisekunden anhält. In einer verwendungsgemäßen Lage des Ventilators 1 ist das pyrotechnisch aufblasbare Auffangkissen 24 in einem Airbagmodul 25 angeordnet. Das Airbagmodul 25 ist an einem massiven, das heißt mechanisch belastbaren Wandring 28 angeordnet. Es können mehrere pyrotechnisch aufblasbare Auffangkissen 24, 24' am Umfang des Rotors 3 verteilt angeordnet sein. Der oder die pyrotechnisch aufblasbaren Auffangkissen 24, 24' können entfaltet werden, wenn die Bremseinrichtung 19 nicht in der Lage ist, den Rotor 3 rechtzeitig vor einer Kollision des Objekts 8 mit dem Rotor 3 anzuhalten. Die pyrotechnisch aufblasbaren Auffangkissen 24, 24' sind in einer verwendungsgemäßen, betriebsbereiten Stellung des Ventilators in Airbagmodulen 25 am Wandring 28 angeordnet. Die Airbagmodule 25 sind signalübertragend mit der Steuereinrichtung 9 verbunden (siehe Figur 1). Bei einer von der Steuereinrichtung 9 berechneten Kollision des Objekts 8 mit dem Rotor 3 bzw. einzelnen Rotorblättern 5 werden die pyrotechnisch aufblasbaren Auffangkissen 24, 24' ausgelöst, wenn eine alternative Abbremsung den Rotor 3 nicht rechtzeitig vor einer Kollision zum Stillstand bringen würde. Die Auffangkissen 24, 24' erstrecken sich in axialer Richtung A (in der Figur 4 von einer Bildebene weg) auch so weit von dem Rotor 3 weg, dass ein Objekt 8 (Tiere bzw. ein Körperteil) gar nicht erst in die Nähe des Rotors 3 gelangen kann.

Zur Erreichung einer gleichmäßigen Abbremsung, Entlastung der Nabe 4 bzw. für eine Momentenabstützung, das heißt zur Verhinderung eines auf den Rotor 3 wirkenden Kippmoments, können zwei oder mehrere versetzt zueinander angeordnete pyrotechnisch aufblasbare Auffangkissen 24, 24`, Stopeinrichtungen 12, 12' bzw. Bremsklötze 21, 21' vorgesehen sein.

Figur 5 zeigt eine weitere Variante eines pyrotechnisch aufblasbaren Auffangkissens 26, welches sich nach einer Auslösung über den Rotor 3 spannt und somit eine Barriere zwischen dem Objekt 8 und dem Rotor 3 ausbildet, bevor das Objekt 8 entgegen einer axialen Richtung A in den Schutzbereich 20 gelangen kann. Gezeigt ist ein axial abdeckendes pyrotechnisch aufblasbares Auffangkissen 26. Das axial abdeckende, pyrotechnisch aufblasbare Auffangkissen 26 ist in einer verwendungsgemäßen, betriebsbereiten Stellung des Ventilators 1 in einem Airbagmodul 27 angeordnet. Das Airbagmodul 27 ist signalübertragend mit der Steuereinrichtung 9 verbunden (siehe Figur 1).

Bei einer von der Steuereinrichtung 9 berechneten Kollision des Objekts 8 mit dem Rotor 3 bzw. einzelnen Rotorblättern 5 wird das pyrotechnisch aufblasbare Auffangkissen 26 ausgelöst, wenn eine alternative Abbremsung den Rotor 3 nicht rechtzeitig vor einer Kollision zum Stillstand bringen würde, so dass eine Barriere zwischen dem Objekt 8 und dem Rotor 3 ausgebildet wird.

Wie eingangs erläutert kann der Ventilator 1 zwei Sensoreinrichtungen 7, 7' mit jeweils zwei Sensoren 10, 10' aufweisen. Hierbei kann ein erster Sensor 10 dazu ausgestaltet sein, eine erste Meßgröße, beispielsweise elektromagnetische Wellen zu erfassen. Ein zweiter Sensor 10` kann dazu ausgestaltet sein, eine zweite, von der ersten Meßgröße abweichenden Meßgröße zu erfassen, beispielsweise elektromagnetische Wellen in einem anderen Frequenzbereich oder eine komplett andere Meßgröße, beispielsweise Ultraschallwellen. Die Sensoren können selektiert werden aus einer nicht abgeschlossenen Liste, aufweisend wahlweise: einen Infrarotsensor, eine Infrarotkamera, einen Ultraschallsensor, einen Lidarsensor, einen Radarsensor, eine bei sichtbarem Licht operierende Kamera.

Ein Verfahren zur Steuerung bzw. Regelung des Ventilators 1 kann wie folgt ausgestaltet sein: In einem ersten Schritt 701 erfolgt ein Erfassen eines Objekts 8, beispielsweise über die Sensoreinrichtung 7 (siehe Figur 1). Bei dem Objekt 8 muss es sich nicht wie dargestellt um einen Hasen handeln. Jegliche, insbesondere lebende Objekte können erfaßt werden. Nach dem Erfassen eines möglicherweise vorhandenen Objekts 8, welches sich dem Rotorblatt 3 nähert, über die Sensoreinrichtungen 7, 7' erfolgt in Schritt 702 ein Extrapolieren einer Bewegungsbahn 11 des Objekts 8 aus einer Lage x und einer Geschwindigkeit v relativ zu dem Ventilator 1 und den Rotorblättern 5 unter Berücksichtigung einer Winkellage p und Rotationsgeschwindigkeit n des Rotors 3. Eine Lage x des Objekts 8 zu mehreren Zeitpunkten wird erfaßt. Aus den Lagen x zu mehreren Zeitpunkten können eine Geschwindigkeit v und eine Beschleunigung a errechnet werden. Aus diesen Werten kann eine, bei gleichbleibender Geschwindigkeit v und Beschleunigung resultierende Bewegungsbahn 11 errechnet werden. Die Bewegungsbahn 11 gibt Aufschluß über zukünftige Lagen x des Objekts 8. Die zukünftige Lage x des Objekts 8 und auch seine Erstreckung um die Lage x wird bei der Extrapolation berücksichtigt. Anschließend erfolgt in Schritt 703 eine Beeinflussung der Rotorgeschwindigkeit n so, dass sich das Objekt 8 weiterhin ohne eine Kollision mit einem der Rotorblätter 5 entlang der Bewegungsbahn 11 bewegen kann.

Im Folgenden werden für einen Ventilator 1 einige etwaige Verfahrensabläufe und Zeiträume, in denen unterschiedliche Schutzmaßnahmen aktiviert werden können, beispielhaft erläutert. Diese gelten in keiner Weise einschränkend, denn es versteht sich, dass die angegebenen Zeiträume stark von der Massenträgheit i3 des Rotors 3 abhängen.

Die Beeinflussung der Rotorgeschwindigkeit n kann bei sehr langen verbleibenden Zeiträumen (1 bis 10 Sekunden) bis zur Kollision durch ein Abschalten des Rotors 3 erfolgen. Die Beeinflussung der Rotorgeschwindigkeit n kann bei langen Zeiträumen (1 bis 5 Sekunden) durch ein Kurzschließen einer Statorwickung erfolgen.

Die Beeinflussung der Rotorgeschwindigkeit n kann bei verbleibenden Zeiträumen, in denen der Rotor 3 elektromechanisch nicht rechtzeitig abgebremst werden kann (0,1 bis 2 Sekunden), durch eine Bremseinrichtung 19 erfolgen (siehe Figur 3).

Die Beeinflussung der Rotorgeschwindigkeit n kann bei kürzeren Zeiträumen, in denen der Rotor 3 auch mit der Bremseinrichtung 19 nicht vor einer Kollision zum Stillstand gebracht werden kann, durch eine Stopeinrichtung 12 erfolgen, die den Rotor 3 unter Inkaufnahme einer Beschädigung der Rotorblätter 5 abrupt zum Stillstand bringt. Alternativ oder ergänzend kann die Beeinflussung der Rotorgeschwindigkeit n bei oben genannten kürzeren Zeiträumen, in denen der Rotor 3 auch mit der Bremseinrichtung 19 nicht vor einer Kollision zum Stillstand gebracht werden kann, durch die Zündung dreier unterschiedlicher, aber kombinierbarer pyrotechnisch aufblasbarer Auffangkissen 16, 24, 26 erfolgen. Ein abbremsendes Auffangkissen 24 bremst dabei nicht nur ab, sondern erstreckt sich auch so weit in axialer Richtung A und entgegen einer axialen Richtung A, dass ein Eingriff des Objekts 8 in den Rotor 3 nicht möglich ist.

Die Beeinflussung der Rotorgeschwindigkeit n kann wie gesagt bei kürzeren Zeiträumen, in denen der Rotor 3 auch mit der Bremseinrichtung 19 nicht vor einer Kollision zum Stillstand gebracht werden kann, durch eine Stopeinrichtung 12 erfolgen, die den Rotor 3 unter Inkaufnahme einer Beschädigung der Rotorblätter 5 abrupt zum Stillstand bringt. Bei der Beschädigung der Rotorblätter 5 kann eine Umgebung vor umherfliegenden Teilen geschützt werden, indem ein außenumfänglich angeordnetes Auffangkissen 16 entsprechend Figur 6 entfaltet wird. Diese Ausgestaltung kann bevorzugt sein, wenn der Ventilator 1 keine außenumfängliche Ringfläche 23 aufweist, oder wenn diese Ringfläche 23 ebenfalls zerstört wird.

Erfolgt die Beeinflussung der Rotorgeschwindigkeit durch die Stopeinrichtung 12, kann die Umgebung vor umherfliegenden Teilen geschützt werden, indem ein den Rotor 3 axial abdeckendes Auffangkissen 26 entsprechend der Figur 5 entfaltet wird. Dies ist bevorzugt, wenn der Ventilator 1 keinen außenumfänglichen Käfig aufweist.

### BEZUGSZEICHENLISTE

- 1: Ventilator
- 2: Rotationsachse
- 3: Rotor
- 4: Nabe
- 5: Rotorblätter
- 6: elektromechanischer Wandler
- 7, 7`: Sensoreinrichtung
- 8: Objekt
- 9: Steuereinrichtung
- 10: erster Sensor
- 10`: zweiter Sensor
- 11: Bewegungsbahn
- 12, 12': Stopeinrichtung
- 13, 13': Aktuator
- 14: Stopelement
- 15: Bewegungsbahn
- 16, 16': Auffangkissen
- 17, 17': Hälfte
- 18, 18': Airbagmodul
- 19: Bremseinrichtung
- 20: Schutzbereich
- 21: Bremsbacke
- 22: Aktuator
- 23: Ringfläche
- 24: Auffangkissen
- 25: Airbagmodul
- 26: Auffangkissen
- 27: Airbagmodul
- 28: Wandring
- a: Beschleunigung
- A: axiale Richtung
- p: Winkel
- v: Geschwindigkeit
- x: Lage

## Patentansprüche

1. Ventilator (1), aufweisend einen Rotor (3), der um eine Rotationsachse (2) rotierbar gelagert ist und an dem schaufelartige Rotorblätter (5) angeordnet sind, weiterhin aufweisend:
• eine Sensoreinrichtung (7, 7') zum Erfassen eines möglicherweise vorhandenen Objekts (8), welches sich einem Rotorblatt (5) nähert,
• eine Steuereinrichtung (9), welche mit der Sensoreinrichtung (7, 7`) und dem Ventilator (1) signalübertragend verbunden ist,
• wobei die Steuereinrichtung (9) ausgestaltet ist zum Extrapolieren einer Bewegungsbahn (11) des Objekts (8) aus einer Lage (x) und einer Geschwindigkeit (v) des Objekts (8),
• und wobei die Steuereinrichtung (9) ferner dazu ausgestaltet ist, eine Winkellage (p) bzw. Rotationsgeschwindigkeit (n) des Rotors (3) dergestalt zu beeinflussen, dass sich das Objekt (8) ohne eine Kollision mit einem der Rotorblätter (5) weiterhin entlang seiner Bewegungsbahn (11) bewegen kann.

2. Ventilator (1) nach Anspruch 1, wobei der Rotor (3) mit einer Bremseinrichtung (19) abbremsbar ist, wobei die Bremseinrichtung (19) dazu ausgestaltet ist, den Rotor (3) innerhalb weniger als zwei Umdrehungen des Rotors (3) bis zum Stillstand abzubremsen.

3. Ventilator (1) nach Anspruch 2, wobei die Bremseinrichtung (19) durch eine an einem Außenumfang des Rotors (3) angeordnete Ringfläche (23) und eine damit zusammenwirkende Bremsbacke (21, 21') gebildet ist.

4. Ventilator (1) nach einem der Ansprüche 1 bis 3, aufweisend ein abbremsendes pyrotechnisch aufblasbares Auffangkissen (24, 24`), welches vor einer bevorstehenden Kollision eines Rotorblattes (5) mit dem Objekt (8) gezündet wird und welches das Rotorblatt (5) anhält.

5. Ventilator (1) nach einem der Ansprüche 1 bis 4, aufweisend ein außenumfängliches pyrotechnisch aufblasbares Auffangkissen (16, 16`), welches so geformt ist, dass es sich bei einem Aufblasen um den Ventilator (1) herum erstreckt, insbesondere um eine Hälfte des Ventilators (1) herum.

6. Ventilator (1) nach einem der Ansprüche 1 bis 5, aufweisend eine mechanische, in eine Bewegungsbahn der Rotorblätter (5) eindringende und den Rotor (5) abrupt zum Stillstand bringende Stopeinrichtung (12).

7. Ventilator nach einem der Ansprüche 1 bis 6, aufweisend ein den Rotor (3) zumindest teilweise axial abdeckendes pyrotechnisch aufblasbares Auffangkissen (26), welches eine Barriere zwischen dem Objekt (8) und den Rotor (3) ausbildet.

8. Ventilator (1) nach einem der vorhergehenden Ansprüche, wobei die Steuereinrichtung (9) dazu ausgestaltet ist, Leiterwicklungen eines Stators und/oder Elektrorotors eines elektromechanischen Wandlers (6), der mit dem Rotor (3) wirkverbunden ist, zur Abbremsung des Rotors (3) kurzzuschließen.

9. Ventilator (1) nach einem der vorhergehenden Ansprüche, wobei die Steuereinrichtung (9) dazu ausgestaltet ist, einen elektromechanischen Wandler (6), der mit dem Rotor (3) wirkverbunden ist, anzuweisen, seine Rotationsgeschwindigkeit (n) zu erhöhen, so dass das Objekt (8) nicht mit einem Rotorblatt (5) kollidiert, sondern zwischen zwei benachbarten Rotorblättern (5) durch den Rotor (3) passieren kann.

10. Ventilator (1) nach einem der vorhergehenden Ansprüche, wobei die Sensoreinrichtung (9) zwei Sensoren (10, 10`) aufweist, wobei ein erster Sensor (10) dazu ausgestaltet ist, eine erste Meßgröße zu erfassen, und wobei ein zweiter Sensor (10') dazu ausgestaltet ist, eine zweite, von der ersten Meßgröße abweichenden Meßgröße zu erfassen, und wobei der erste und zweite Sensor selektiert ist aus einer Liste, aufweisend: einen Infrarotsensor, eine Infrarotkamera, einen Ultraschallsensor, einen Lidarsensor, einen Radarsensor, eine bei sichtbarem Licht operierende Kamera.

11. Verfahren zum Ansteuern eines Ventilators (1), der Ventilator (1) aufweisend einen Rotor (3) mit Rotorblättern (5), wobei ferner eine Sensoreinrichtung (7) vorgesehen ist und ein Schutz eines Objekts (8) vor einer Kollision mit dem Rotor (3) ergänzt werden kann über eine Entfaltung eines pyrotechnisch aufblasbaren Auffangkissens (16, 24, 26), welches das Rotorblatt (5) anhält oder abdeckt, wobei das Verfahren die folgenden Schritte aufweist:
• Erfassen eines möglicherweise vorhandenen Objekts (8), welches sich dem Rotorblatt (5) nähert, über die Sensoreinrichtung (7),
• Extrapolieren einer Bewegungsbahn (11) des Objekts (8) aus einer Lage (x) und einer Geschwindigkeit (v) relativ zu dem Ventilator (1) und den Rotorblättern (5) unter Berücksichtigung einer Winkellage (p) und Rotationsgeschwindigkeit (n) des Rotors (3),
• Beeinflussung der Rotationsgeschwindigkeit (n) so, dass sich das Objekt (8) weiterhin ohne eine Kollision mit einem der Rotorblätter (5) entlang der Bewegungsbahn (11) bewegen kann.

12. Verfahren nach Anspruch 11, wobei die Beeinflussung der Rotorgeschwindigkeit (n) über einen Aktuator (22) erfolgt, der eine Bremsbacke (21) betätigt, welche auf eine außenumfänglich am Rotor (3) angeordnete Ringfläche (23) wirkt, um den Rotor (3) zu bremsen.

13. Computerprogrammprodukt mit Programmcode-Mitteln, die auf einem computerlesbaren Datenträger gespeichert sind, um das Verfahren nach einem der Ansprüche 11 bis 12 durchzuführen, wenn das Computerprogrammprodukt auf einem in einer Steuereinheit (9) nach Anspruch 1 vorhandenen Computer, ausgeführt wird.

14. Computerprogramm mit kodierten Anweisungen zur Durchführung des Verfahrens nach einem der Ansprüche 11 bis 12, wenn das Computerprogramm auf einem Computer in einer Steuereinheit (9) nach Anspruch 1 ausgeführt wird.

## Claims

1. Fan (1), comprising a rotor (3) which is rotatably mounted about an axis of rotation (2) and on which blade-like rotor blades (5) are arranged, further comprising:
- a sensor device (7, 7') for detecting a possibly present object (8) approaching a rotor blade (5),
- a control device (9) which is connected to the sensor device (7, 7') and the fan (1) in a signal-transmitting manner,
- wherein the control device (9) is designed to extrapolate a movement path (11) of the object (8) from a position (x) and a velocity (v) of the object (8),
- and wherein the control device (9) is further designed to influence an angular position (p) or rotational speed (n) of the rotor (3) in such a way that the object (8) can continue to move along its movement path (11) without colliding with one of the rotor blades (5).

2. Fan (1) according to claim 1, wherein the rotor (3) can be braked with a braking device (19), wherein the braking device (19) is designed to brake the rotor (3) to a standstill within less than two revolutions of the rotor (3).

3. Fan (1) according to claim 2, wherein the braking device (19) is formed by an annular surface (23) arranged on an outer circumference of the rotor (3) and a brake shoe (21, 21') cooperating therewith.

4. Fan (1) according to any one of claims 1 to 3, comprising a decelerating pyrotechnically inflatable catch pad (24, 24') which is ignited before an imminent collision of a rotor blade (5) with the object (8) and which stops the rotor blade (5).

5. Fan (1) according to any one of claims 1 to 4, comprising an outer circumferential pyrotechnically inflatable containment pad (16, 16') shaped to extend around the fan (1) when inflated, in particular around one half of the fan (1).

6. Fan (1) according to any one of claims 1 to 5, comprising a mechanical stop device (12) penetrating into a path of movement of the rotor blades (5) and bringing the rotor (5) to an abrupt stop.

7. Fan according to any one of claims 1 to 6, comprising a pyrotechnically inflatable catch pad (26) at least partially axially covering the rotor (3) and forming a barrier between the object (8) and the rotor (3).

8. Fan (1) according to one of the preceding claims, wherein the control device (9) is designed to short-circuit conductor windings of a stator and/or electric motor of an electromechanical transducer (6), which is operatively connected to the rotor (3), for braking the rotor (3).

9. Fan (1) according to any one of the preceding claims, wherein the control device (9) is configured to instruct an electromechanical transducer (6), which is operatively connected to the rotor (3), to increase its rotational speed (n) so that the object (8) does not collide with a rotor blade (5) but can pass through the rotor (3) between two adjacent rotor blades (5).

10. Fan (1) according to one of the preceding claims, wherein the sensor device (9) has two sensors (10, 10'), wherein a first sensor (10) is designed to detect a first measured variable, and wherein a second sensor (10') is designed to detect a second measured variable differing from the first measured variable, and wherein the first and second sensors are selected from a list comprising: an infrared sensor, an infrared camera, an ultrasonic sensor, a lidar sensor, a radar sensor, a camera operating in visible light.

11. Method for controlling a fan (1), the fan (1) comprising a rotor (3) with rotor blades (5), wherein furthermore a sensor device (7) is provided and a protection of an object (8) against a collision with the rotor (3) can be supplemented by a deployment of a pyrotechnically inflatable catching cushion (16, 24, 26), which catches the object (8).
rotor blade (5) stops or covers, the method comprising the following steps:
- Detection of a possibly present object (8) approaching the rotor blade (5) via the sensor device (7),
- Extrapolating a movement path (11) of the object (8) from a position (x) and a speed (v) relative to the fan (1) and the rotor blades (5), taking into account an angular position (p) and rotational speed (n) of the rotor (3),
- Influencing the rotational speed (n) in such a way that the object (8) can continue to move along the movement path (11) without colliding with one of the rotor blades (5).

12. The method according to claim 11, wherein the rotor speed (n) is influenced via an actuator (22) which actuates a brake shoe (21) which acts on an annular surface (23) arranged on the outer circumference of the rotor (3) in order to brake the rotor (3).

13. A computer program product comprising program code means stored on a computer-readable medium for performing the method of any one of claims 11 to 12 when the computer program product is executed on a computer present in a control unit (9) according to claim 1.

14. A computer program comprising coded instructions for carrying out the method according to any one of claims 11 to 12, when the computer program is executed on a computer in a control unit (9) according to claim 1.

## Revendications

1. Ventilateur (1) comprenant un rotor (3) qui est monté de manière à pouvoir tourner autour d'un axe de rotation (2) et sur lequel sont disposées des pales de rotor (5) en forme de pale, comprenant en outre :
- un dispositif de détection (7, 7') pour détecter un objet (8) éventuellement présent qui s'approche d'une pale de rotor (5),
- un dispositif de commande (9) qui est relié au dispositif de détection (7, 7') et au ventilateur (1) pour la transmission de signaux,
- dans lequel le dispositif de commande (9) est conçu pour extrapoler une trajectoire de déplacement (11) de l'objet (8) à partir d'une position (x) et d'une vitesse (v) de l'objet (8),
- et le dispositif de commande (9) étant en outre conçu pour influencer une position angulaire (p) ou une vitesse de rotation (n) du rotor (3) de telle sorte que l'objet (8) puisse continuer à se déplacer le long de sa trajectoire de déplacement (11) sans entrer en collision avec l'une des pales de rotor (5).

2. Ventilateur (1) selon la revendication 1, dans lequel le rotor (3) peut être freiné par un dispositif de freinage (19), le dispositif de freinage (19) étant conçu pour freiner le rotor (3) jusqu'à l'arrêt en moins de deux rotations du rotor (3).

3. Ventilateur (1) selon la revendication 2, dans lequel le dispositif de freinage (19) est formé par une surface annulaire (23) disposée sur une périphérie extérieure du rotor (3) et par une mâchoire de frein (21, 21') coopérant avec celle-ci.

4. Ventilateur (1) selon l'une quelconque des revendications 1 à 3, comprenant un coussin de réception (24, 24') gonflable par voie pyrotechnique, à effet de freinage, qui est allumé avant une collision imminente d'une pale de rotor (5) avec l'objet (8) et qui arrête la pale de rotor (5).

5. Ventilateur (1) selon l'une quelconque des revendications 1 à 4, comprenant un coussin de récupération (16, 16') gonflable par voie pyrotechnique sur sa périphérie extérieure, configuré pour s'étendre autour du ventilateur (1) lors d'un gonflage, notamment autour d'une moitié du ventilateur (1).

6. Ventilateur (1) selon l'une quelconque des revendications 1 à 5, comprenant un dispositif d'arrêt mécanique (12) pénétrant dans une trajectoire des pales (5) et arrêtant brusquement le rotor (5).

7. Ventilateur selon l'une quelconque des revendications 1 à 6, comprenant un coussin de collecte (26) gonflable par voie pyrotechnique, recouvrant au moins partiellement axialement le rotor (3) et formant une barrière entre l'objet (8) et le rotor (3).

8. Ventilateur (1) selon l'une des revendications précédentes, dans lequel le dispositif de commande (9) est conçu pour court-circuiter des enroulements conducteurs d'un stator et/ou d'un moteur électrique d'un convertisseur électromécanique (6), qui est en liaison active avec le rotor (3), pour le freinage du rotor (3).

9. Ventilateur (1) selon l'une quelconque des revendications précédentes, dans lequel le dispositif de commande (9) est configuré pour ordonner à un transducteur électromécanique (6) relié fonctionnellement au rotor (3) d'augmenter sa vitesse de rotation (n), de sorte que l'objet (8) n'entre pas en collision avec une pale de rotor (5), mais peut passer entre deux pales de rotor (5) adjacentes à travers le rotor (3).

10. Ventilateur (1) selon l'une des revendications précédentes, dans lequel le dispositif de détection (9) comprend deux capteurs (10, 10'), un premier capteur (10) étant configuré pour détecter une première grandeur de mesure et un deuxième capteur (10') étant configuré pour détecter une deuxième grandeur de mesure différente de la première grandeur de mesure, et le premier et le deuxième capteur étant sélectionnés dans une liste comprenant : un capteur infrarouge, une caméra infrarouge, un capteur à ultrasons, un capteur lidar, un capteur radar, une caméra fonctionnant en lumière visible.

11. Procédé de commande d'un ventilateur (1), le ventilateur (1) présentant un rotor (3) avec des pales de rotor (5), un dispositif de détection (7) étant en outre prévu et une protection d'un objet (8) contre une collision avec le rotor (3) pouvant être complétée par un déploiement d'un coussin de réception (16, 24, 26) gonflable par voie pyrotechnique, qui arrête ou recouvre la pale de rotor (5), le procédé présentant les étapes suivantes :
- détecter un objet (8) éventuellement présent qui s'approche de la pale de rotor (5) par l'intermédiaire du dispositif de détection (7),
- extrapoler une trajectoire de déplacement (11) de l'objet (8) à partir d'une position (x) et d'une vitesse (v) par rapport au ventilateur (1) et aux pales de rotor (5) en tenant compte d'une position angulaire (p) et d'une vitesse de rotation (n) du rotor (3),
- influencer la vitesse de rotation (n) de manière à ce que l'objet (8) puisse continuer à se déplacer le long de la trajectoire de déplacement (11) sans entrer en collision avec l'une des pales de rotor (5).

12. Procédé selon la revendication 11, dans lequel l'influence sur la vitesse du rotor (n) s'effectue par l'intermédiaire d'un actionneur (22) qui actionne une mâchoire de frein (21) qui agit sur une surface annulaire (23) disposée sur la périphérie extérieure du rotor (3) afin de freiner le rotor (3).

13. Un produit programme d'ordinateur comprenant des moyens de code de programme stockés sur un support de données lisible par ordinateur pour mettre en oeuvre le procédé selon l'une quelconque des revendications 11 à 12, lorsque le produit programme d'ordinateur est exécuté sur un ordinateur présent dans une unité de commande (9) selon la revendication 1.

14. Programme informatique comportant des instructions codées pour la mise en oeuvre du procédé selon l'une quelconque des revendications 11 à 12, lorsque le programme informatique est exécuté sur un ordinateur dans une unité de commande (9) selon la revendication 1.
